# EUROPÄISCHE PATENTSCHRIFT

(11) **EP 4 444 558 B1**
(45) Veröffentlichungstag und Bekanntmachung des Hinweises auf die Patenterteilung: **29.04.2026**
(21) Anmeldenummer: 22829687.7
(22) Anmeldetag: 02.12.2022
(51) Int. Cl.: B60C 13/00

(54) **FAHRZEUGLUFTREIFEN**
PNEUMATIC VEHICLE TIRE
PNEU DE VÉHICULE

(30) Priorität: 06.12.2021 DE 102021213826
(43) Veröffentlichungstag der Anmeldung: 16.10.2024
(73) Patentinhaber: Continental Reifen Deutschland GmbH, 30175 Hannover (DE)
(72) Erfinder: RITTWEGER, Stefan, 30175 Hannover (DE)
(74) Vertreter: Continental Corporation
(86) Internationale Anmeldenummer: PCT/DE2022/200288
(87) Internationale Veröffentlichungsnummer: WO 2023/104259

(56) Entgegenhaltungen:
- EP-A1- 2 502 758
- EP-A1- 3 722 112
- EP-A1- 3 808 549
- DE-A1- 102016 218 486
- DE-A1- 102016 218 487
- DE-A1- 102019 207 943

## Beschreibung

Die Erfindung betrifft einen Fahrzeugluftreifen mit einer Seitenwand mit mindestens einem sich zumindest über einen Umfangsabschnitt der Seitenwand erstreckenden Seitenwanddekor, welches sich aus strukturierten Flächenelementen, glatten Flächenelementen und einer an diese Flächenelemente angrenzenden Basisschraffur aus verzweigungs- und kreuzungsfrei verlaufenden Schraffurrippen zusammensetzt, wobei die strukturierten Flächenelemente eine Kopie oder einen Schatten zumindest von Teilbereichen von glatten Flächenelementen wiedergeben und die strukturierten Flächenelemente Licht stärker absorbieren als die Basisschraffur.

Ein derartiger Fahrzeugluftreifen ist beispielsweise aus der DE 10 2016 218 487 A1 bekannt. Bei diesem Fahrzeugreifen sind die strukturierten Flächenelemente ("zweite oberflächlich strukturierte Flächenelemente") und die Basisschraffur ("erste oberflächlich strukturierte Flächenelemente") Bestandteile von polygonförmigen Dekorflächen. Die glatten Flächenelemente bilden ein netzförmiges Muster mit einer Vielzahl von einander kreuzenden, langgestreckten Stegen, welche die Dekorflächen begrenzen. Die strukturierten Flächenelemente, welche eine Kopie oder einen Schatten der glatten Flächenelementen wiedergeben, befinden sich innerhalb der Dekorflächen und weisen eine Oberflächenstruktur auf, die eine Oberflächenrauheit ist oder aus einer Vielzahl punktueller dreidimensionaler Elemente oder aus einer Vielzahl von parallel zueinander verlaufender Schraffurrippen besteht. Bei den beschriebenen Ausführungsbeispielen ist die Basisschraffur aus verzweigungs- und kreuzungsfrei verlaufenden Schraffurrippen gebildet. Das Seitenwanddekor erzeugt eine Tiefenwirkung und ist für relativ große Flächenbereiche von Seitenwänden geeignet.

Aus der DE 10 2016 218 486 A1 ist ein Fahrzeugluftreifen mit einer Seitenwand mit einem Seitenwanddekor aus strukturierten Flächenelementen ("zweiter Typ Schraffurflächenteil"), einer Basisschraffur ("erste Typ Schraffurflächenteil") und glatten Flächenelementen bekannt. Die glatten Flächenelemente bilden ein netzförmiges Muster mit einer Vielzahl von einander kreuzenden, langgestreckten Stegen. Die strukturierten Flächenelemente geben eine Kopie oder einen Schatten der glatten Flächenelemente wieder und befinden sich innerhalb von Dekorflächen. Die Basisschraffur und die Flächenelemente umfassen jeweils eine Vielzahl von parallel zueinander verlaufenden Schraffurrippen ("Erhebungen"), wobei die Dichte der Schraffurrippen in der Basisschraffur geringer ist als die Dichte der Schraffurrippen in den strukturierten Flächenelementen. Die Schraffurrippen weisen jeweils Flanken auf, welche zu einer Senkrechten auf die Seitenwand ermittelt sind, wobei der Winkel der Flanken der Schraffurrippen der Basisschraffur 35° bis 50°, insbesondere bis zu 45°, beträgt und wobei der Winkel der Flanken der Schraffurrippen der strukturieren Flächenelemente um mindestens 10°, insbesondere um mindestens 20°, größer als der Winkel der Flanken der Schraffurrippen der Basisschraffur. Solche Schraffurrippen sollen für eine gute Kontrastwirkung sorgen.

In der DE 10 2019 207 943 A1 ist ein Fahrzeugluftreifen mit einer Seitenwand mit einem Seitenwanddekor, welches ausschließlich aus strukturierten Flächenelementen besteht, offenbart. Die strukturierten Flächenelemente weisen parallel zueinander verlaufende Schraffurrippen auf, welche jeweils als verzweigter Rippenzug mit Kreuzungsstellen ausgebildet sind, wobei sich der Rippenzug von den Kreuzungsstellen je in vier Richtungen erstreckt.

Die EP 3 722 112 A1 offenbart einen Fahrzeugreifen mit einer Seitenwand mit einem Seitenwanddekor aus ersten und zweiten, je mit einer Kontraststruktur versehenen, strukturierten Flächenelementen, wobei die zweiten strukturierten Flächenelemente Licht stärker absorbieren als die ersten strukturierten Flächenelemente. Die Kontraststruktur der zweiten strukturierten Flächenelemente weist Rippenzüge auf, welche bezüglich ihre Längserstreckungsrichtung parallel zueinander verlaufen und jeweils aus abwechselnd aufeinanderfolgenden, ersten und zweiten sternförmigen Erhebungen mit je sechs Erhebungsarmen zusammengesetzt sind. Die Erhebungsarme sind, im Querschnitt betrachtet, gleichschenkelig dreieckförmig und weisen eine abgeflachte Spitze auf. Die zweiten sternförmigen Erhebungen sind, in Draufsicht betrachtet, um 90° gedreht zu den ersten sternförmigen Erhebungen orientiert. Die Kontraststruktur der ersten strukturierten Flächenelemente unterscheidet sich von jener der zweiten strukturierten Flächenelemente dadurch, dass der Abstand zwischen den sternförmigen Erhebungen aus benachbarten Rippenzügen größer ist, sodass die Erhebungen in unterschiedlichen "Dichten" angeordnet sind.

Bei den aktuell auf Seitenwänden von Fahrzeugluftreifen vorzufindenden Seitenwanddekoren, ist die dreidimensionale Wirkung (plastischer Effekt) begrenzt. Dabei hängt die wahrnehmbare dreidimensionale Wirkung stark von der Art und Weise des Lichteinfalls und dem Betrachtungswinkel, also der Position des Betrachters, ab.

Der Erfindung liegt daher die Aufgabe zugrunde, auf einem Fahrzeugluftreifen der eingangs genannten Art ein großflächiges, von der Art und Weise des Lichteinfalls und des Betrachtungswinkels zumindest weitgehend unabhängiges und besonders auffallend dreidimensional wirkendes Seitenwanddekor zur Verfügung zu stellen.

Gelöst wird die gestellte Aufgabe erfindungsgemäß dadurch, dass die strukturierten Flächenelemente jeweils mit einer flächendeckenden Kontraststruktur mit verzweigten Rippenzügen versehen sind, wobei jeder verzweigte Rippenzug Kreuzungsstellen aufweist, von welchen sich der Rippenzug jeweils in zumindest drei Richtungen erstreckt, wobei jeder Rippenzug Bestandteil einer ungleichmäßigen Berg- und Talstruktur ist, welche aus dem Rippenzug und an diesen angrenzenden, geschlossen endenden Tälern gebildet ist.

Alternativ wird die gestellte Aufgabe erfindungsgemäß dadurch gelöst, dass die strukturierten Flächenelemente jeweils mit einer flächendeckenden Kontraststruktur mit verzweigten Rippenzügen versehen sind, wobei jeder verzweigte Rippenzug Kreuzungsstellen aufweist, von welchen sich der Rippenzug jeweils in zumindest drei Richtungen erstreckt, wobei die Rippenzüge in eine Richtung langgestreckt sind und bezogen auf ihre Längserstreckungsrichtung in Draufsicht parallel zueinander verlaufen und wobei die Schraffurrippen der Basisschraffur Rippenflanken aufweisen, welche relativ zu einer Senkrechten auf die Seitenwand unter einem ersten Winkel verlaufen, wobei der Rippenzug Rippenflanken aufweist, welche relativ zu einer Senkrechten auf die Seitenwand unter einem zweiten Winkel verlaufen, wobei der erste Winkel mindestens 250%, bevorzugt mindestens 300%, des zweiten Winkels beträgt.

Solche Rippenzüge verleihen den strukturierten Flächenelementen weitgehend richtungsunabhängige Lichtreflexions- und Lichtabsorptionseigenschaften, sodass die Flächenelemente nahezu ausnahmslos als dunkle Flächen wahrgenommen werden. Die dreidimensionale Wirkung des Seitenwanddekors ist somit zumindest im Wesentlichen unabhängig von der Art und Weise des Lichteinfalls und des Betrachtungswinkels, wodurch ein großflächiges Seitenwanddekor mit den gewünschten Lichtreflexions- und Lichtabsorptionseigenschaften ermöglicht ist.

Die ungleichmäßige Berg- und Talstruktur ermöglicht eine richtungsunabhängig und besonders stark ausgeprägte Kontrastwirkung. Die besonders stark ausgeprägte Kontrastwirkung dieser Struktur ist auch dadurch begründet, dass sie sich im Zuge der Vulkanisation in einem zumindest im Wesentlichen tadellosen Zustand ausformen lässt. Auf der Innenseite der Seitenwandschale der Vulkanisationsform ist eine einzige den Rippenzug ausbildende, gelaserte, zusammenhängende Kerbenstruktur ausgebildet. In einer solchen Kerbenstruktur lässt sich die entsprechende Kautschukmischung im Zuge der Vulkanisation sehr gut einformen, sodass sich die Kerbenstruktur vollständig bzw. im Wesentlichen vollständig mit Kautschukmischung füllt. In der Folge werden Lufteinschlüsse vermieden und die Vulkanisationsform lässt sich vollständig bzw. im Wesentlichen vollständig entlüften, sodass die ungleichmäßige Berg- und Talstruktur in tadellosem Zustand ausgeformt wird.

Die Rippenzüge, welche in eine Richtung langgestreckt sind und bezogen auf ihre Längserstreckungsrichtung in Draufsicht parallel zueinander verlaufen, eignen sich hervorragend für großflächige Seitenwanddekore.

Die bei der alternativen Lösung ferner vorgesehenen "steilen" Rippenflanken der Rippenzuges reflektieren deutlich weniger Licht als die "flachen" Rippenflanken der Schraffurrippen der Basisschraffur. Dies trägt zu einer weiteren Verbesserung der Kontrastwirkung bei.

Gemäß einer bevorzugten Ausführung erstreckt sich jeder Rippenzug von den Kreuzungsstellen in genau drei Richtungen. Der Rippenzug stellt daher eine Vielzahl von in unterschiedlichen Richtungen verlaufenden Rippenflanken zur Verfügung, an welchen von allen möglichen Richtungen einfallendes Licht gestreut, mehrfach reflektiert und absorbiert wird, sodass eine besonders hohe, vom Betrachtungswinkel unabhängige Kontrastwirkung erzielt wird. Unter allen Betrachtungswinkeln erscheinen daher die strukturierten Flächenelemente besonders dunkel und das Seitenwanddekor ist besonders kontrastreich. Zusätzlich treten Schatteneffekte auf, die besonders auf dem schwarzen Gummi des Fahrzeugreifens ein deutliches Hervorheben des Seitenwanddekors unterstützen.

Nachfolgend wird auf bevorzugte, zur zweiten Alternativlösung gehörende, miteinander kombinierbare Varianten eingegangen.

Bei einer ersten bevorzugten Variante setzt sich jeder Rippenzug, in Draufsicht betrachtet, aus in einer regelmäßigen Zickzackform verlaufenden, abwechselnd aufeinanderfolgenden Rippen und von diesen abzweigenden, gerade verlaufenden Rippen zusammen. Solche Rippenzüge sind ebenfalls hervorragend für großflächige Seitenwanddekore geeignet.

Eine zweite bevorzugte Variante, welche mit der Ausgestaltung des Basisschraffur in Verbindung steht, ist dadurch gekennzeichnet, dass die Schraffurrippen der Basisschraffur an ihrer Basis einen gegenseitigen ersten Abstand und die parallel nebeneinander verlaufenden Rippenzüge zueinander einen gegenseitigen lichten, zweiten Abstand aufweisen, wobei der erste Abstand mindestens 150% des zweiten Abstandes beträgt. Die Rippenzüge der Kontraststruktur sind daher "dichter" angeordnet als die Schraffurrippen der Basisschraffur. Durch den gewählten Abstand unterscheiden sich die Lichtabsorptions- und Lichtreflexionseigenschaften der Basisschraffur von jenen der die Rippenzüge aufweisenden, flächendeckenden Kontraststruktur der strukturierten Flächenelemente derart, dass die dreidimensionale Wirkung des Seitendwanddekors besonders gut zur Geltung kommt.

Eine bevorzugte Ausführung der ersten Alternativlösung der Aufgabe besteht darin, dass die Kontraststruktur aus zusammengefügten, in Draufsicht übereinstimmende Gestalt aufweisenden Kontraststrukturzellen mit je einer ungleichmäßigen Berg- und Talstruktur gebildet ist, wobei die Kontraststruktur entlang der gegenseitigen Anschlussstellen der Kontraststrukturzellen die Rasterung definierende Täler aufweist, wobei die ungleichmäßigen Berg- und Talstruktur bis zu den die Rasterung definierenden Tälern reicht und die geschlossen endenden Tälern von den die Rasterung definierenden Tälern ausgehen. Durch die Wiederholung (Vervielfältigung) von derartigen Kontraststrukturzellen ist die Kontraststruktur in ihrer Größe beliebig skalierbar und daher hervorragend für Flächenbereiche unterschiedlicher Größe geeignet.

Eine weitere bevorzugte Ausführung der ersten Alternativlösung der Aufgabe ist dadurch gekennzeichnet, dass die Schraffurrippen der Basisschraffur Rippenflanken aufweisen, welche relativ zu einer Senkrechten auf die Seitenwand unter einem ersten Winkel verlaufen, wobei der Rippenzug, welcher Bestandteil einer ungleichmäßigen Berg- und Talstruktur ist, Rippenflanken aufweist, welche an einer Vielzahl von Stellen zu einer Senkrechten auf die Seitenwand unter einem zweiten Winkel verlaufen, wobei der erste Winkel mindestens 200%, bevorzugt mindestens 250%, besonders bevorzugt mindestens 300%, des zweiten Winkels beträgt. Die "steilen" Rippenflanken der Rippenzuges reflektieren deutlich weniger Licht als die "flachen" Rippenflanken der Schraffurrippen der Basisschraffur. Dies trägt zu einer weiteren Verbesserung der Kontrastwirkung bei.

Gemäß einer weiteren bevorzugten Ausführung sind die strukturierten Flächenelemente und die Basisschraffur jeweils innerhalb von polygonförmigen Dekorflächen ausgebildet, zwischen welchen ein aus den glatten Flächenelementen gebildetes, zumindest abschnittsweise unregelmäßiges netzförmigen Muster mit langgestreckten Stegen verläuft.

Bei der zuletzt genannten bevorzugten Ausführung setzen sich die polygonförmigen Dekorflächen jeweils aus einem einzigen strukturierten Flächenelement und einem einen Teilbereich der Basisschraffur bildenden einoder mehrteiligen Flächenelement zusammen.

Eine weitere bevorzugten Ausführung ist dadurch gekennzeichnet, dass die strukturierten Flächenelemente derart auf übereinstimmende Weise gegenüber den glatten Flächenelemente versetzt ausgebildet sind, dass die von den strukturierten Flächenelementen wiedergegebenen Schatten eine aus einer einzigen Richtung kommende Lichtquelle widerspiegeln.

Gemäß einer weiteren bevorzugten Ausführung sind die strukturierten Flächenelemente Dekorflächen, insbesondere Dekorflächen verschiedener Gestalt, wobei der bzw. die von strukturierten Flächenelementen und von glatten Flächenelementen freie(n) Bereich(e) des Seitenwanddekors von der Basisschraffur eingenommen ist bzw. sind.

Bei der letztgenannten bevorzugten Ausführung ist es von Vorteil, wenn Paare aus je einem strukturierten Flächenelement und einem glatten Flächenelement vorgesehen sind, wobei die zu einem Paar gehörenden Flächenelemente benachbart zueinander ausgebildet, insbesondere aneinander angrenzend ausgebildet, sind, wobei das glatte Flächenelement derart in das strukturierte Flächenelement hineinragt, dass das strukturierte Flächenelement als gegenüber dem glatten Flächenelemente in den Hintergrund versetzter Schatten erscheint. Dies ermöglich eine besonders realitätsnahe dreidimensional Wirkung des Seitenwanddekors.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine schematische Ansicht eines Umfangsabschnittes einer Seitenwand eines Fahrzeugreifens mit einer ersten Ausführungsvariante der Erfindung,
Fig. 2 einen vergrößerten Schnitt entlang der Linie II-II der Fig. 1,
Fig. 3 eine vergrößerte Schrägansicht im Bereich eines strukturierten Flächenelementes,
Fig. 4 eine Draufsicht im Bereich des Flächenelements aus Fig. 3,
Fig. 5 eine vergrößerte Draufsicht im Bereich eines weiteren strukturierten Flächenelementes,
Fig. 6 eine weiter vergrößerte Schrägansicht einer zum Flächenelement aus Fig. 5 gehörenden Kontraststrukturzelle,
Fig. 7 eine Draufsicht auf die Kontraststrukturzelle aus Fig. 6, wobei ein Schnitt entlang einer Höhenfläche F gezeigt ist und
Fig. 8 eine schematische Ansicht eines Umfangsabschnittes einer Seitenwand eines Fahrzeugreifens mit einer zweiten Ausführungsvariante der Erfindung.

Die Erfindung befasst sich mit einem auf der Außenfläche einer Seitenwand eines Fahrzeugreifens, insbesondere eines Fahrzeugluftreifens, ausgebildeten Seitenwanddekor.

Auf den Seitenwänden von Fahrzeugreifen sind üblicherweise die vorgeschriebenen Angaben, wie die Reifendimension, der Speedindex, der Hersteller, die Reifenbezeichnung, der Verwendungszweck (Sommer-/Winterreifen) und dergleichen angegeben. Diese Angaben befinden sich meist auf glatten Flächenbereichen der Seitenwände. Es verbleibt einiges an freier Fläche auf den Seitenwänden, auf welcher ein Seitenwanddekor ausgebildet sein kann.

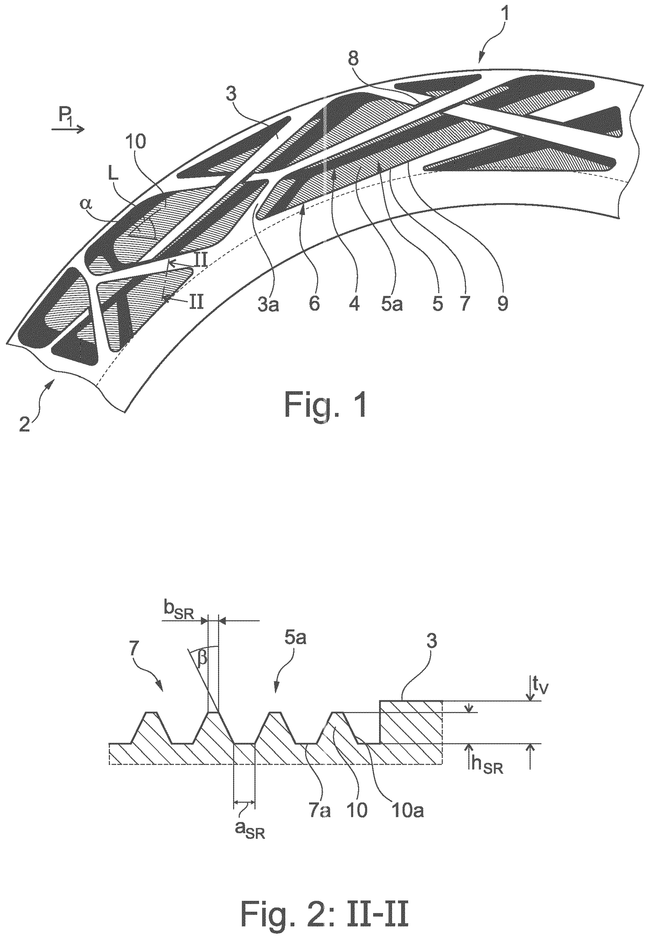

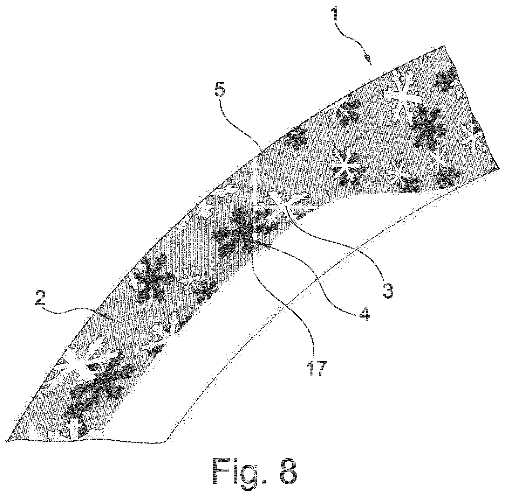

Fig. 1 und Fig. 8 zeigen jeweils eine in die Ebene projizierte Darstellung eines Umfangsabschnittes einer Seitenwand 1. Auf der Seitenwand 1 ist ein Seitenwanddekor 2 ausgebildet, welches sich zumindest über einen Umfangsabschnitt der Seitenwand 1 erstreckt. Das Seitenwanddekor 2 umfasst unstrukturierte, glatte Flächenelemente 3, oberflächlich strukturierte Flächenelemente 4 mit einer flächendeckend ausgeführten Kontraststruktur sowie eine an die Flächenelemente 3, 4 angrenzende Basisschraffur 5. Die strukturierten Flächenelemente 4 sind derart ausgeführt, dass sie wesentlich mehr Licht absorbieren als die Basisschraffur 5 und daher bei Sicht auf die Seitenwand 1 dunkler erscheinen als die Basisschraffur 5.

Bei der in Fig. 1 gezeigten Ausführung sind sowohl die strukturierten Flächenelemente 4 als auch die Basisschraffur 5 Bestandteile von polygonförmigen, strukturierten Dekorflächen 6 mit verrundeten Ecken, insbesondere mit drei bis fünf verrundeten Ecken. Die Dekorflächen 6 befinden sich in gegenüber den glatten Flächenelementen 3 in der Seitenwand 1 ausgebildeten, seichten Vertiefungen 7 (vergl. Fig. 2). Die Vertiefungen 7 und damit die Dekorflächen 6 sind am Niveau der glatten Flächenelemente 3 von Kanten 9 begrenzt. Die Dekorflächen 6 setzen sich jeweils aus einem einzigen der bereits erwähnten, strukturierten Flächenelemente 4 und einem einen Teilbereich der Basisschraffur 5 bildenden ein- oder mehrteiligen, insbesondere zwei- oder dreiteiligen, Flächenelement 5a zusammen. Zwischen den Dekorflächen 6 können in Draufsicht bis zu 0,5 mm breite Verbindungsvertiefungen 8 verlaufen, in welchen insbesondere die Basisschraffur 5 fortgeführt ist.

Die glatten Flächenelemente 3 bilden ein zumindest abschnittsweise unregelmäßiges, netzförmiges Muster mit einer Vielzahl einander kreuzenden, langgestreckten Stegen 3a, welche die Dekorflächen 6 begrenzen. Da das gebildete Muster zumindest abschnittsweise unregelmäßig ist, sind Dekorflächen 6 mit unterschiedlicher Gestalt vorhanden.

Die strukturierten Flächenelemente 4 der Dekorflächen 6 geben eine Kopie oder einen Schatten von einem an die jeweilige Dekorfläche 6 angrenzenden Teilbereich des aus den glatten Flächenelementen 3 gebildeten netzförmigen Musters wieder. Die strukturierten Flächenelemente 4 sind dabei gegenüber dem "zugehörigen" Teilbereich des netzförmigen Musters in und quer zu Umfangsrichtung geringfügig versetzt. Der Versatz erfolgt insbesondere derart, dass eine Schattenbildung simuliert wird, welcher eine aus einer bestimmten Richtung kommend Lichtquelle zugrunde liegt (angedeutet durch den Pfeil P₁). Bei einer "Kopie" stimmen die Abmessungen des strukturierten Flächenelementes 4 mit den Abmessungen des jeweiligen Teilbereiches des netzförmigen Musters überein. Bei einem "Schatten" ist die Form des strukturierten Flächenelementes 4 gegenüber dem jeweiligen Teilbereich des netzförmigen Musters verzerrt, sodass sich Größe und Abmessungen entsprechend unterscheiden.

Fig. 2 zeigt einen Querschnitt im Bereich der Basisschraffur 5, also im Bereich eines Flächenelementes 5a. Die Flächenelemente 5a sind jeweils aus in der zugehörigen Vertiefung 7 befindlichen, verzweigungs- und kreuzungsfrei verlaufenden Schraffurrippen 10 gebildet, welche gemäß Fig. 1 beim Ausführungsbeispiel in Draufsicht gerade, parallel zueinander und zur Umfangsrichtung unter einem Winkel α von 30° bis 50° verlaufen. Der Winkel α ist bezüglich einer Tangente ermittelt, welche lokal an eine in Umfangsrichtung umlaufende Linie L angelegt ist. Gemäß Fig. 2 weist die Vertiefung 7 eine senkrecht zum Niveau der glatten Flächenelemente 3 gemessene konstante Tiefe tv von 0,30 mm bis 1,00 mm, insbesondere von 0,40 mm bis 0,50 mm, sowie einen auf der Tiefe tv verlaufenden Boden 7a auf. Die Schraffurrippen 10 erstrecken sich vom Boden 7a ausgehend senkrecht nach außen, besitzen eine Höhe h_{SR} von 0,15 mm bis 0,35 mm, insbesondere von 0,20 mm bis 0,30 mm, sowie von höchstens 100% der Tiefe tv Vertiefung 7, weisen, im Querschnitt senkrecht zu ihrer Erstreckungsrichtung betrachtet (vergl. Lage der Linie II-II in Fig. 1), übereinstimmende Formen, beim Ausführungsbeispiel die Form von gleichschenkeligen Dreiecken mit einer abgeflachten Spitze mit einer Breite b_{SR} von vorzugsweise 0,07 mm bis 0,12 mm auf. Die Schraffurrippen 10 sind jeweils mit zwei seitlichen Rippenflanken 10a versehen, die, im erwähnten Querschnitt betrachtet, zur Senkrechten auf die Seitenwand 1 unter übereinstimmend großen Winkeln β von 15° bis 45°, insbesondere von mindestens 20°, bevorzugt von mindestens 30°, verlaufen. Die Schraffurrippen 10 können an ihrer Basis am Boden 7a unmittelbar aneinander anschließen, bei der gezeigten Ausführung weisen sie an ihrer Basis einen gegenseitigen Abstand a_{SR} von 0,50 mm bis 0,70 mm auf.

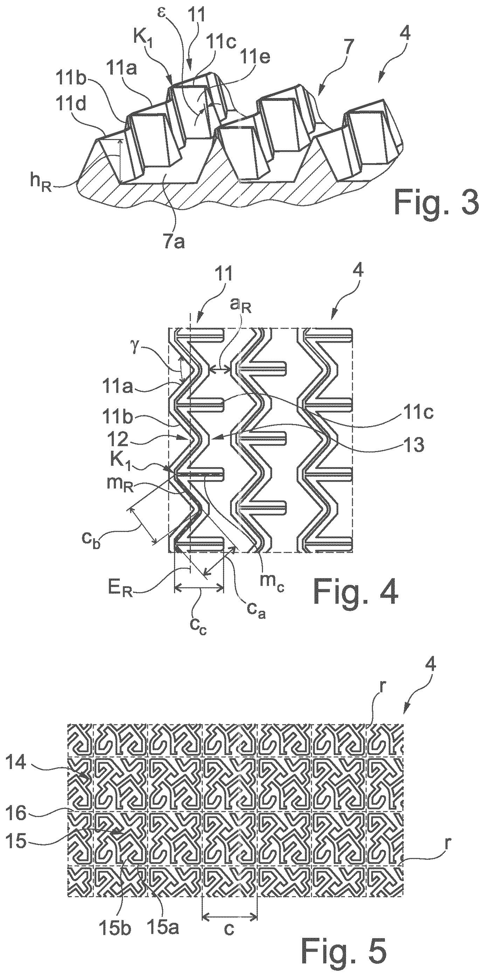

Fig. 3 und Fig. 4 zeigen einen Teilbereich eines strukturierten Flächenelementes 4 mit einer flächendeckenden Kontraststruktur gemäß einer ersten Variante und Fig. 5 zeigt einen Teilbereich eines strukturierten Flächenelementes 4 mit einer flächendeckenden Kontraststruktur gemäß einer zweiten Variante.

Bei der in Fig. 3 und Fig. 4 gezeigten Variante weist das strukturierte Flächenelement 4 eine Kontraststruktur aus nebeneinander verlaufenden, langgestreckten, verzweigten Rippenzügen 11 auf, die sich vom Boden 7a der Vertiefung 7 (Fig. 3) erheben. Jeder Rippenzug 11 weist eine Vielzahl von Kreuzungsstellen K₁ auf, von welchen sich der Rippenzug 11 jeweils in drei Richtungen erstreckt. Jeder Rippenzug 11 setzt sich in Draufsicht aus in einer regelmäßigen Zickzackform verlaufenden, abwechselnd aufeinanderfolgenden Rippen 11a, 11b sowie von diesen abzweigenden, in Draufsicht gerade verlaufenden seitlichen Rippen 11c zusammen. Gemäß Fig. 4 weist jeder Rippenzug 11 eine in Draufsicht seinen Rippen 11a, 11b folgende Längserstreckungsrichtung E_{R} auf, die bei der gezeigten Ausführung eine Gerade ist, wobei die Rippenzüge 11 bezüglich der Längserstreckungsrichtung E_{R} parallel zueinander verlaufen. Die Rippen 11a, 11b weisen jeweils eine entlang ihrer Mittellinie m_{R} ermittelte Erstreckungslänge cₐ (Rippe 11a), c_{b} (Rippe 11b) auf, wobei die Erstreckungslängen cₐ, c_{b} jeweils untereinander bevorzugt gleich groß sind und 0,20 mm bis 0,40 mm, insbesondere 0,25 mm bis 0,30 mm, betragen.

Zwischen aufeinanderfolgenden Rippen 11a, 11b ist jeweils ein Inneneckbereich 12 und ein Außeneckbereich 13 gebildet, wobei die Rippen 11a, 11b an den Inneneckbereichen 12 miteinander jeweils einen Innenwinkel γ von 70° bis 120° einschließen.

Von jenen Inneneckbereichen 12, die sich an derselben Seite der aufeinanderfolgenden Rippen 11a, 11b befinden, zweigt jeweils eine der seitlichen Rippen 11c ab, wobei die seitlichen Rippen 11c jeweils eine entlang ihrer Mittellinie m_{c} ermittelte Erstreckungslänge c_{c} von 0,20 mm bis 0,50 mm, bevorzugt von 0,25 mm bis 0,40 mm, aufweisen.

Die innerhalb eines strukturierten Flächenelementes 4 nebeneinander verlaufenden Rippenzüge 11 sind in ihrer Längserstreckungsrichtung E_{R} gegeneinander derart versetzt, dass jeweils quer zur Längserstreckungsrichtung E_{R} betrachtet, eine Rippe 11a aus dem einen Rippenzug 11 neben einer Rippe 11b aus dem benachbarten Rippenzug 11 verläuft und dass die seitlichen Rippen 11c jeweils in Richtung zu einem Inneneckbereich 12 des benachbarten Rippenzuges 11 weisen. Zwischen einander zugewandten Außeneckbereichen 13 benachbarter Rippenzüge 11 liegt ein gegenseitiger lichter Abstand a_{R} von 0,20 mm bis 0,40 mm vor.

Gemäß Fig. 3 weisen die Rippen 11a, 11b, 11c einen im Wesentlichen dreieckigen Querschnitt, einen abgeflachten Sattelbereich 11d und zwei in Richtung Boden 7a der Vertiefung 7 abfallende Rippenflanken 11e auf, welche relativ zu einer Senkrechten auf den Boden 7a jeweils unter einem Winkel ε (in Fig. 3 angedeutet) von 2° bis 15°, insbesondere von 10° bis 12°, verlaufen. Die Rippenzüge 11 weisen eine senkrecht zum Boden 7a ermittelte größte Höhe h_{R} von 0,25 mm bis 0,35 mm sowie von höchstens 100% der Tiefe tv (Fig. 2) der Vertiefung 7 auf. Der erwähnte Sattelbereich 11d kann als schmales, 0,05 mm bis 0,10 mm breites, durchgehend über sämtliche Rippen 11a, 11b, 11c verlaufendes Plateau ausgebildet sein. Bei einer alternativen Ausführung ist der Sattelbereich 11d eine Rundung zwischen den oberen Enden der jeweiligen Rippenflanken 11e.

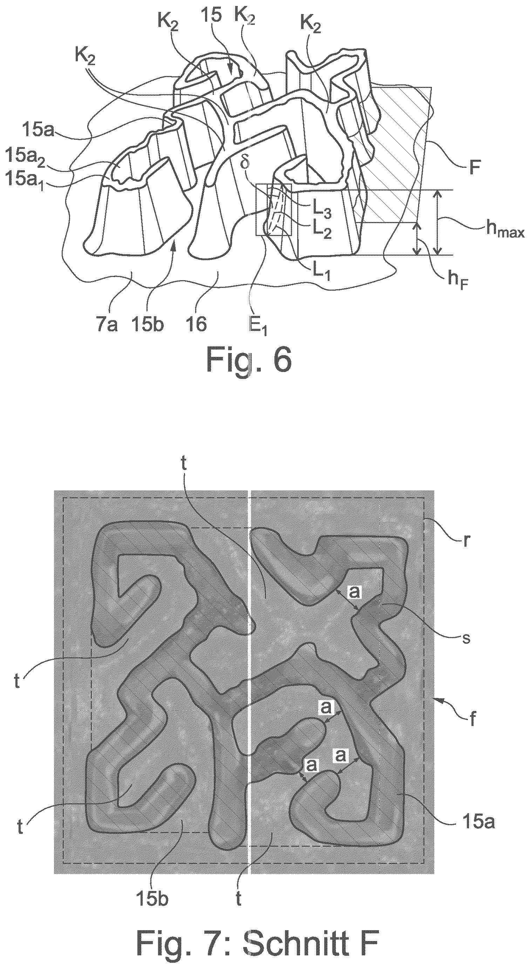

Fig. 5 zeigt eine weitere Variante der Kontraststruktur eines strukturierten Flächenelementes 4, wobei ein Quadratraster (Quadratgitter) mit Rasterlinien r eingezeichnet ist. Die Kontraststruktur setzt sich aus einer Vielzahl von im Wesentlichen übereinstimmend ausgeführten, beim Ausführungsbeispiel in Draufsicht bezogen auf ihren äußeren Umfang quadratischen und schachbrettartig aneinander anschließenden Kontraststrukturzellen 14 mit einer auf die Rasterlinien r bezogenen Kantenlänge c von 700,0 µm bis 1200,0 µm zusammen. Jede Kontraststrukturzelle 14 weist eine ungleichmäßige Berg- und Talstruktur 15 (vergl. Fig. 6) auf, wobei die Berg- und Talstrukturen 15 - entsprechend der im Wesentlichen übereinstimmend ausgeführten Kontraststrukturzellen 14 - ebenfalls im Wesentlichen übereinstimmend ausgeführt sind.

Unter "im Wesentlichen übereinstimmend ausgeführten Berg- und Talstrukturen 15" werden zum einen solche verstanden, welche unmittelbar auf der Seitenwand 1 mittels eines softwaregesteuerten Lasers als "überstimmend" erzeugt wurden. Zum anderen werden unter "im Wesentlichen übereinstimmend ausgeführten Berg-und Talstrukturen 15" solche verstanden, welche im Zuge der Vulkanisation von einer auf der Innenseite der Seitenschale befindlichen, korrespondieren Lasergravur erzeugt wurden, wobei die Lasergravur eine Vielzahl von aneinander anschließenden Gravurbereichen, welche jeweils mittels eines softwaregesteuerten Lasers als "übereinstimmend" erzeugt wurden, umfasst. Bedingt durch die beim Lasergravieren auftretenden Schmelz- und Verdampfungsprozesse lassen sich mit den aktuell zur Verfügung stehenden Methoden auf Seitenwänden keine identischen (100% übereinstimmenden) Berg-und Talstrukturen 15 erzeugen. "Im Wesentlichen übereinstimmend" bezeichnet daher innerhalb der technischen Toleranzgrenzen des Herstellungsverfahrens (softwaregesteuerte Lasergravur) auftretende Abweichungen.

Die Kontraststruktur weist ferner die Rasterlinien r entlangverlaufende, einander kreuzende Täler 16 auf, welche miteinander einen gitterförmigen, vorzugsweise mit freiem Auge erkennbaren, Talraster bilden.

Die ungleichmäßige Berg- und Talstruktur 15 jeder Kontraststrukturzelle 14 ist von den jeweiligen Abschnitten der Täler 16 umlaufen, wobei sich innerhalb jeder Kontraststrukturzelle 14 die an die jeweiligen Rasterlinien r angrenzenden Teilbereich der entsprechenden vier Täler 16 befinden. Die ungleichmäßige Berg-und Talstruktur 15 ist derart flächendeckend innerhalb der zugehörigen Kontraststrukturzelle 14 ausgebildet, dass die Berg- und Talstruktur 15 bis zu den Teilbereichen der jeweiligen vier Täler 16 reicht, an diese Teilbereiche daher flächig angrenzt.

Die Anordnung der Kontraststrukturzellen 14 und die Ausführung der ungleichmäßigen Berg- und Talstrukturen 15 sind derart, dass die ungleichmäßigen Berg- und Talstrukturen 15, in Draufsicht betrachtet, durch (verdrehungsfreie) Parallelverschiebung ineinander überführbar sind.

Fig. 6 zeigt eine schematische, vereinfachte Schrägansicht auf eine in idealisierter Form dargestellte, ungleichmäßige Berg- und Talstruktur 15. Die Berg- und Talstruktur 15 ist von einem einzigen, zusammenhängenden, ungleichmäßigen, mehrfach verzweigten Rippenzug 15a sowie von einer Anzahl von Tälern 15b, welche von den die Berg- und Talstruktur 15 umlaufenden Tälern 16 des Talrasters ausgehen und im "Inneren" des Rippenzuges 15a geschlossen enden (vergl. Fig. 5), gebildet. Die Täler 15b sind also als "Sackgassen" ausgeführt, sodass keine von Abschnitten des Rippenzuges 15a umlaufene (umschlossene) Talkessel (Talbecken) vorhanden sind. Die Täler 15b sind, in Draufsicht betrachtet, ausgehend vom ihrem am jeweiligen Tal 16 liegenden Ende ungleichmäßig langgezogene und ggf. verzweigte Negative (Fig. 5). Bevorzugter Weise gehen von zumindest zwei, insbesondere von zumindest drei, der vier Täler 16 jeweils zumindest eines der geschlossen endenden Täler 15b aus.

Der Rippenzug 15a weist eine Anzahl von in Draufsicht T- bzw. Y-förmigen Kreuzungsstellen K₂ auf, wobei die Kreuzungsstellen K₂ die einzigen Kreuzungsstellen des Rippenzuges 15a sind und wobei insbesondere drei bis sieben Kreuzungsstellen K₂ vorgesehen sind. Der Rippenzug 15a besitzt eine gegenüber dem und senkrecht zum Boden 7a ermittelte maximale Höhe hₘₐₓ (Höhe an der bzw. den höchsten Stelle(n)) von 0,25 mm bis 0,35 mm.

Der Rippenzug 15a weist ferner einen einzigen Sattelbereich 15a₁ und eine Anzahl von ungleichmäßig gekrümmten Rippenflanken 15a₂ auf, wobei die Rippenflanken 15a₂ vom Sattelbereich 15a₁ ausgehen, zum Boden 7a verlaufen und an den freien Enden des Rippenzuges 15a diesen umlaufend zusammenlaufen. In Fig. 6 ist exemplarisch eine senkrecht zum Boden 7a stehende Schnittebene E₁ im Bereich einer Rippenflanke 15a₂ eingezeichnet. Die Schnittebene E₁ weist mit der betreffenden Rippenflanke 15a₂ eine gekrümmte Schnittlinie L₁ auf. Die Rippenflanke 15a₂ verläuft derart, dass eine die Enden der Schnittlinie L₁ verbindende gerade Hilfslinie L₂ mit einer senkrecht auf den Boden 7a stehenden, die Hilfslinie L₂ schneidenden Bezugslinie L₃ einen Winkel δ von 5° bis 20° einschließt. Im Bereich der Rippenflanken 15a₂ können eine Vielzahl von Schnittebenen E₁ gelegt werden, welche zu einem die Neigung der Rippenflanken 15a₂ definierendem Winkel δ von 5° bis 20° führen.

In Fig. 6 ist eine parallel zum Boden 7a verlaufende Höhenflächen F angedeutet. Die Höhenfläche F schneidet die Berg- und Talstruktur 15 und verläuft auf einer senkrecht zum Boden 7a ermittelten Höhe h_{F} von 50% der maximalen Höhe hₘₐₓ. Die Höhenfläche F weist in jeder Kontraststrukturzelle 14 einen in Draufsicht durch die entsprechenden Abschnitte der jeweiligen Rasterlinien r begrenzten Höhenflächenbereich f (Fig. 7) auf. Wie Fig. 7 zeigt, weist der Rippenzug 15a mit dem Höhenflächenbereich f eine einteilige (zusammenhängende) in Fig. 7 schraffierte Schnittfläche s auf. Die Schnittfläche s ist somit Bestandteil des zugehörigen Höhenflächenbereiches f. Im Bereich der Schnittfläche s ist der Höhenflächenbereich f vom Rippenzug 15a durchragt.

Die Schnittfläche s nimmt 40% bis 60% des Höhenflächenbereiches f ein. Jedes geschlossen endende Tal 15b weist im Höhenflächenbereich f eine an die Schnittfläche s angrenzende Talfläche t auf. Im Bereich jeder Talfläche t weist der Rippenzug 15a eine Vielzahl von Stellen auf, an welchen der gerade und als Mindestabstand ermittelte Abstand a zwischen einander gegenüberliegenden Teilen des Rippenzuges 15a 0,20 mm bis 0,40 mm beträgt.

Ist die flächendeckende Kontraststruktur gemäß der ersten Variante vorgesehen (Fig. 3, Fig. 4), beträgt der Winkel β (Fig. 2), unter welchem die Rippenflanken 10a der Schraffurrippen 10 der Basisschraffur 5 verlaufen, mindestens 250%, bevorzugt mindestens 300%, des Winkels ε (Fig. 3), unter welchem die Rippenflanken 11e des Rippenzuges 11 verlaufen.

Ist die flächendeckende Kontraststruktur gemäß der zweiten Variante vorgesehen (Fig. 5, Fig. 6), beträgt der Winkel β (Fig. 2), unter welchem die Rippenflanken 10a der Schraffurrippen 10 der Basisschraffur 5 verlaufen, mindestens 200%, bevorzugt mindestens 250%, besonders bevorzugt mindestens 300%, des Winkels δ (Fig. 6), welcher die Neigung der Rippenflanken 15a₂ charakterisiert.

Der Abstand a_{SR} (Fig. 2), welcher zwischen den Schraffurrippen 10 der Basisschraffur 5 vorliegt, beträgt mindestens 150% des Abstandes a_{R} (Fig. 4), welcher zwischen den Schraffurrippen 11 vorliegt, bzw. des Abstandes a (Fig. 7), welcher im Bereich des Rippenzugs 15a vorliegt.

Bei der in Fig. 8 gezeigten Ausführung sind die strukturierten Flächenelemente 4 schneeflockenförmige, strukturierte Dekorflächen verschiedener schneeflockenförmiger Gestalt, wobei sich die Flächenelemente 4 jeweils in gegenüber dem Niveau der glatten Flächenelemente 3 in der Seitenwand 1 ausgebildeten Vertiefungen 17 befinden, die analog zu den Vertiefungen 7 (Fig. 1, Fig. 2) ausgeführt sind. Die glatten Flächenelemente 3 sind schneeflockenförmige, glatte Dekorflächen verschiedener schneeflockenförmiger Gestalt, wobei diese bevorzugt jeweils zumindest teilweise an eines der Flächenelemente 4 angrenzen. Jener Bereich bzw. jene Bereiche des Seitenwanddekors 2, welcher bzw. welche nicht mit glatten Flächenelementen 3 bzw. Flächenelementen 4 versehen ist bzw. sind, ist bzw. sind von der Basisschraffur 5 eingenommen. Die Basisschraffur 5 grenzt somit an die Flächenelemente 3, 4 an, reicht also im Bereich des Seitenwanddekors 2 bis zu den Flächenelementen 3, 4. Die Basisschraffur 5 ist analog zur Ausführungsvariante aus Fig. 1 ausgeführt.

Der Großteil der Flächenelemente 3, 4 ist derart paarweise und zueinander versetzt ausgebildet, dass die strukturierten Flächenelemente 4 jeweils einen Schatten zumindest eines Teilbereiches des zugeordneten Flächenelementes 3 wiedergeben. Die zu einem Paar gehörenden Flächenelemente 3, 4 sind insbesondere aneinander angrenzend ausgebildet, wobei die Schneeflockenform des glatten Flächenelements 3 in die Schneeflockenform des strukturierten Flächenelements 4 hineinragt, diese derart "überlagert", sodass das strukturierte Flächenelement 4 als ein gegenüber dem glatten Flächenelemente 3 in den Hintergrund versetzter Schatten erscheint.

Die Kontraststruktur der strukturierten Flächenelemente 4 ist übereinstimmend zu einer der Varianten, wie sie im Zusammenhang mit Fig. 3 bis Fig. 7 erläutert wurden, ausgeführt.

Die Erfindung ist auf die beschriebenen Ausführungsbeispiele nicht beschränkt.

Insbesondere können sich die verzweigten Rippenzüge ausgehend von Kreuzungsstellen in mehr als drei, insbesondere in vier oder fünf, Richtungen erstrecken.

### Bezugszeichenliste

- 1: Seitenwand
- 2: Seitenwanddekor
- 3: glattes Flächenelement
- 3a: Steg
- 4: strukturiertes Flächenelement
- 5: Basisschraffur
- 5a: Flächenelement
- 6: Dekorfläche
- 7: Vertiefung
- 7a: Boden
- 8: Verbindungsvertiefung
- 9: Kante
- 10: Schraffurrippe
- 10a: Rippenflanke
- 11: Rippenzug
- 11a, 11b: Rippe
- 11c: seitliche Rippe
- 11d: Sattelbereich
- 11e: Rippenflanke
- 12: Inneneckbereich
- 13: Außeneckbereich
- 14: Kontraststrukturzelle
- 15: Berg- und Talstruktur
- 15a: Rippenzug
- 15a₁: Sattelbereich
- 15a₂: Rippenflanke
- 15b: Tal
- 16: Tal
- 17: Vertiefung
- a, a_{R}, a_{SR}: Abstand
- b_{SR}: Breite
- c: Kantenlänge
- cₐ, c_{b}, c_{c}: Erstreckungslänge
- E₁: Schnittebene
- E_{R}: Längserstreckungsrichtung
- f: Höhenflächenbereich
- F: Höhenfläche
- h_{SR}, h_{R}, h_{F}: Höhe
- hₘₐₓ: maximale Höhe
- K₁, K₂: Kreuzungsstelle
- L: Linie
- L₁: Schnittlinie
- L₂: Hilfslinie
- L₃: Bezugslinie
- m_{c}, m_{R}: Mittellinie
- P₁: Pfeil
- r: Rasterlinie
- s: Schnittfläche
- t: Talfläche
- tv: Tiefe
- α, β, δ, ε: Winkel
- γ: Innenwinkel

## Patentansprüche

1. Fahrzeugreifen mit einer Seitenwand (1) mit mindestens einem sich zumindest über einen Umfangsabschnitt der Seitenwand (1) erstreckenden Seitenwanddekor (2), welches sich aus strukturierten Flächenelementen (4), glatten Flächenelementen (3) und einer an diese Flächenelemente (3, 4) angrenzenden Basisschraffur (5) aus verzweigungs- und kreuzungsfrei verlaufenden Schraffurrippen (10) zusammensetzt, wobei die strukturierten Flächenelemente (4) eine Kopie oder einen Schatten zumindest von Teilbereichen von glatten Flächenelementen (3) wiedergeben und die strukturierten Flächenelemente (4) Licht stärker absorbieren als die Basisschraffur (5),
**dadurch gekennzeichnet,**
**dass** die strukturierten Flächenelemente (4) jeweils mit einer flächendeckenden Kontraststruktur mit verzweigten Rippenzügen (15a) versehen sind, wobei jeder verzweigte Rippenzug (15a) Kreuzungsstellen (K₂) aufweist, von welchen sich der Rippenzug (15a) jeweils in zumindest drei Richtungen erstreckt, wobei jeder Rippenzug (15a) Bestandteil einer ungleichmäßigen Berg- und Talstruktur (15) ist, welche aus dem Rippenzug (15a) und an diesen angrenzenden, geschlossen endenden Tälern (15b) gebildet ist.

2. Fahrzeugreifen mit einer Seitenwand (1) mit mindestens einem sich zumindest über einen Umfangsabschnitt der Seitenwand (1) erstreckenden Seitenwanddekor (2), welches sich aus strukturierten Flächenelementen (4), glatten Flächenelementen (3) und einer an diese Flächenelemente (3, 4) angrenzenden Basisschraffur (5) aus verzweigungs- und kreuzungsfrei verlaufenden Schraffurrippen (10) zusammensetzt, wobei die strukturierten Flächenelemente (4) eine Kopie oder einen Schatten zumindest von Teilbereichen von glatten Flächenelementen (3) wiedergeben und die strukturierten Flächenelemente (4) Licht stärker absorbieren als die Basisschraffur (5),
**dadurch gekennzeichnet,**
**dass** die strukturierten Flächenelemente (4) jeweils mit einer flächendeckenden Kontraststruktur mit verzweigten Rippenzügen (11) versehen sind, wobei jeder verzweigte Rippenzug (11) Kreuzungsstellen (K₁) aufweist, von welchen sich der Rippenzug (11) jeweils in zumindest drei Richtungen erstreckt, wobei die Rippenzüge (11) in eine Richtung langgestreckt sind und bezogen auf ihre Längserstreckungsrichtung (E_{R}) in Draufsicht parallel zueinander verlaufen und wobei die Schraffurrippen (10) der Basisschraffur (5) Rippenflanken (10a) aufweisen, welche relativ zu einer Senkrechten auf die Seitenwand (1) unter einem ersten Winkel (β) verlaufen, wobei der Rippenzug (11) Rippenflanken (11e) aufweist, welche relativ zu einer Senkrechten auf die Seitenwand (1) unter einem zweiten Winkel (ε) verlaufen, wobei der erste Winkel (β) mindestens 250%, bevorzugt mindestens 300%, des zweiten Winkels (ε) beträgt.

3. Fahrzeugreifen nach Anspruch 1 oder 2, **dadurch gekennzeichnet, dass** sich jeder Rippenzug (11, 15a) von den Kreuzungsstellen (K₁, K₂) in genau drei Richtungen erstreckt.

4. Fahrzeugreifen nach Anspruch 2, **dadurch gekennzeichnet, dass** sich jeder Rippenzug (11), in Draufsicht betrachtet, aus in einer regelmäßigen Zickzackform verlaufenden, abwechselnd aufeinanderfolgenden Rippen (11a, 11b) und von diesen abzweigenden, gerade verlaufenen Rippen (11c) zusammensetzt.

5. Fahrzeugluftreifen nach Anspruch 2 oder 4, **dadurch gekennzeichnet, dass** die Schraffurrippen (10) der Basisschraffur (5) an ihrer Basis einen gegenseitigen ersten Abstand (a_{SR}) und die parallel nebeneinander verlaufenden Rippenzüge (11) zueinander einen gegenseitigen lichten, zweiten Abstand (a_{R}) aufweisen, wobei der erste Abstand (a_{SR}) mindestens 150% des zweiten Abstandes (a_{R}) beträgt.

6. Fahrzeugluftreifen nach Anspruch 1, **dadurch gekennzeichnet, dass** die Kontraststruktur aus zusammengefügten, in Draufsicht übereinstimmende Gestalt aufweisenden Kontraststrukturzellen (14) mit je einer ungleichmäßigen Berg- und Talstruktur (15) gebildet ist, wobei die Kontraststruktur entlang der gegenseitigen Anschlussstellen der Kontraststrukturzellen (14) die Rasterung definierende Täler (16) aufweist,
wobei die ungleichmäßigen Berg- und Talstruktur (15) bis zu den die Rasterung definierenden Tälern (16) reicht und die geschlossen endenden Tälern (15b) von den die Rasterung definierenden Tälern (16) ausgehen.

7. Fahrzeugluftreifen nach Anspruch 1 oder 6, **dadurch gekennzeichnet, dass** die Schraffurrippen (10) der Basisschraffur (5) Rippenflanken (10a) aufweisen, welche relativ zu einer Senkrechten auf die Seitenwand (1) unter einem ersten Winkel (β) verlaufen, wobei der Rippenzug (15a), welcher Bestandteil einer ungleichmäßigen Berg- und Talstruktur (15) ist, Rippenflanken (15a₂) aufweist, welche an einer Vielzahl von Stellen zu einer Senkrechten auf die Seitenwand unter einem zweiten Winkel (δ) verlaufen, wobei der erste Winkel (β) mindestens 200%, bevorzugt mindestens 250%, besonders bevorzugt mindestens 300%, des zweiten Winkels (δ) beträgt.

8. Fahrzeugluftreifen nach einem der Ansprüche 1 bis 7, **dadurch gekennzeichnet, dass** die strukturierten Flächenelemente (4) und die Basisschraffur (5) jeweils innerhalb von polygonförmigen Dekorflächen (6) ausgebildet sind, zwischen welchen ein aus den glatten Flächenelementen (3) gebildetes, zumindest abschnittsweise unregelmäßiges netzförmigen Muster mit langgestreckten Stegen (3a) verläuft.

9. Fahrzeugluftreifen nach Anspruch 8, **dadurch gekennzeichnet, dass** sich die polygonförmigen Dekorflächen (6) jeweils aus einem einzigen strukturierten Flächenelement (4) und einem einen Teilbereich der Basisschraffur (5) bildenden ein- oder mehrteiligen Flächenelement (5a) zusammensetzen.

10. Fahrzeugluftreifen nach einem der Ansprüche 1 bis 9, **dadurch gekennzeichnet, dass** die strukturierten Flächenelemente (4) derart auf übereinstimmende Weise gegenüber den glatten Flächenelemente (3) versetzt ausgebildet sind, dass die von den strukturierten Flächenelementen (4) wiedergegebenen Schatten eine aus einer einzigen Richtung (Pfeil P₁) kommende Lichtquelle widerspiegeln.

11. Fahrzeugluftreifen nach einem der Ansprüche 1 bis 10, **dadurch gekennzeichnet, dass** die strukturierten Flächenelemente (4) Dekorflächen sind, insbesondere Dekorflächen verschiedener Gestalt, sind, wobei der bzw. die von strukturierten Flächenelementen (4) und von glatten Flächenelementen (3) freie(n) Bereich(e) des Seitenwanddekors (2) von der Basisschraffur (5) eingenommen ist bzw. sind.

12. Fahrzeugluftreifen nach Anspruch 11, **dadurch gekennzeichnet, dass** Paare aus je einem strukturierten Flächenelement (4) und einem glatten Flächenelement (3) vorgesehen sind, wobei die zu einem Paar gehörenden Flächenelemente (3, 4) benachbart zueinander ausgebildet, insbesondere aneinander angrenzend ausgebildet, sind, wobei das glatte Flächenelement (3) derart in das strukturierte Flächenelement (4) hineinragt, dass das strukturierte Flächenelement (4) als gegenüber dem glatten Flächenelemente (3) in den Hintergrund versetzter Schatten erscheint.

## Claims

1. Vehicle tyre having a sidewall (1) with at least one sidewall decoration (2) that extends at least over a circumferential portion of the sidewall (1) and is made up of structured surface elements (4), smooth surface elements (3) and base hatching (5) that adjoins these surface elements (3, 4) and is made up of hatching ribs (10) that extend without branching and intersecting, wherein the structured surface elements (4) reproduce a copy or a shadow at least of partial regions of smooth surface elements (3), and the structured surface elements (4) absorb light to a greater extent than the base hatching (5),
**characterized**
**in that** the structured surface elements (4) are each provided with an area-covering contrast structure with branched rib portions (15a), wherein each branched rib portion (15a) has intersection points (K₂) from which the rib portion (15a) respectively extends in at least three directions, wherein each rib portion (15a) is a constituent part of an irregular peak and trough structure (15) which is formed by the rib portion (15a) and closed-ended troughs (15b) adjoining the latter.

2. Vehicle tyre having a sidewall (1) with at least one sidewall decoration (2) that extends at least over a circumferential portion of the sidewall (1) and is made up of structured surface elements (4), smooth surface elements (3) and base hatching (5) that adjoins these surface elements (3, 4) and is made up of hatching ribs (10) that extend without branching and intersecting, wherein the structured surface elements (4) reproduce a copy or a shadow at least of partial regions of smooth surface elements (3), and the structured surface elements (4) absorb light to a greater extent than the base hatching (5),
**characterized**
**in that** the structured surface elements (4) are each provided with an area-covering contrast structure with branched rib portions (11), wherein each branched rib portion (11) has intersection points (K₁) from which the rib portion (11) respectively extends in at least three directions, wherein the rib portions (11) are elongate in one direction and extend parallel to one another in plan view with respect to their direction of longitudinal extent (E_{R}) and wherein the hatching ribs (10) of the base hatching (5) have rib flanks (10a) that extend at a first angle (β) relative to a perpendicular to the sidewall (1), wherein the rib portion (11) has rib flanks (11e) that extend at a second angle (ε) relative to a perpendicular to the sidewall (1), wherein the first angle (β) is at least 250%, preferably at least 300%, of the second angle (ε).

3. Vehicle tyre according to Claim 1 or 2, **characterized in that** each rib portion (11, 15a) extends from the intersection points (K₁, K₂) in exactly three directions.

4. Vehicle tyre according to Claim 2, **characterized in that** each rib portion (11), as seen in plan view, is made up of alternately successive ribs (11a, 11b) that extend in a regular zigzag shape and of ribs (11c) that branch off therefrom and extend in a straight line.

5. Pneumatic vehicle tyre according to Claim 2 or 4, **characterized in that** the hatching ribs (10) of the base hatching (5) have, at their base, a mutual first spacing (a_{SR}) and the rib portions (11) extending parallel to one another have a mutual clear, second spacing (a_{R}) from one another, wherein the first spacing (a_{SR}) is at least 150% of the second spacing (a_{R}).

6. Pneumatic vehicle tyre according to Claim 1, **characterized in that** the contrast structure is formed by joined-together contrast structure cells (14) that have a matching shape in plan view and each have an irregular peak and trough structure (15), wherein the contrast structure has troughs (16) defining the grid pattern along the mutual connection points of the contrast structure cells (14), wherein the irregular peak and trough structure (15) reaches as far as the troughs (16) defining the grid pattern and the closed-ended troughs (15b) originate from the troughs (16) defining the grid pattern.

7. Pneumatic vehicle tyre according to Claim 1 or 6, **characterized in that** the hatching ribs (10) of the base hatching (5) have rib flanks (10a) that extend at a first angle (β) relative to a perpendicular to the sidewall (1), wherein the rib portion (15a), which is a constituent part of an irregular peak and trough structure (15), has rib flanks (15a₂) that extend at a second angle (δ) to a perpendicular to the sidewall at a multiplicity of points, wherein the first angle (β) is at least 200%, preferably at least 250%, particularly preferably at least 300%, of the second angle (δ).

8. Pneumatic vehicle tyre according to one of Claims 1 to 7, **characterized in that** the structured surface elements (4) and the base hatching (5) are each formed within polygonal decorative areas (6) between which an at least partially irregular reticular pattern that is formed by the smooth surface elements (3) and has elongate webs (3a) extends.

9. Pneumatic vehicle tyre according to Claim 8, **characterized in that** the polygonal decorative areas (6) are each made up of a single structured surface element (4) and a single- or multi-part surface element (5a) that forms a partial region of the base hatching (5).

10. Pneumatic vehicle tyre according to one of Claims 1 to 9, **characterized in that** the structured surface elements (4) are formed in a uniformly offset manner with respect to the smooth surface elements (3) such that the shadows reproduced by the structured surface elements (4) reflect a light source coming from a single direction (arrow P₁).

11. Pneumatic vehicle tyre according to one of Claims 1 to 10, **characterized in that** the structured surface elements (4) are decorative areas, in particular decorative areas with different shapes, wherein the region(s) of the sidewall decoration (2) that is/are free of structured surface elements (4) and of smooth surface elements (3) is/are taken up by the base hatching (5).

12. Pneumatic vehicle tyre according to Claim 11, **characterized in that** pairs made up in each case of a structured surface element (4) and a smooth surface element (3) are provided, wherein the surface elements (3, 4) belonging to a pair are formed adjacently to one another, in particular formed in a manner adjoining one another, wherein the smooth surface element (3) projects into the structured surface element (4) such that the structured surface element (4) appears to be a shadow offset into the background with respect to the smooth surface elements (3).

## Revendications

1. Pneu de véhicule avec une paroi latérale (1) avec au moins un décor de paroi latérale (2) s'étendant au moins sur une section partielle périphérique de la paroi latérale (1), lequel se compose d'éléments de surface structurés (4), d'éléments de surface lisses (3) et d'un hachurage de base (5) adjacent à ces éléments de surface (3, 4) composé de nervures de hachurage (10) sans ramification ni intersection, les éléments de surface structurés (4) reproduisant une copie ou une ombre au moins de zones partielles d'éléments de surface lisses (3) et les éléments de surface structurés (4) absorbant la lumière plus fortement que le hachurage de base (5),
**caractérisé en ce que**
les éléments de surface structurés (4) sont chacun pourvus d'une structure de contraste recouvrant la surface avec des trains de nervures ramifiés (15a), chaque train de nervures ramifié (15a)présentant des points d'intersection (K₂) à partir desquels le train de nervures (15a) s'étend dans au moins trois directions, chaque train de nervures (15a) faisant partie d'une structure irrégulière de crêtes et de creux (15) formée par le train de nervures (15a) et des creux (15b) adjacents à celle-ci, se terminant de manière fermée.

2. Pneu de véhicule avec une paroi latérale (1) avec au moins un décor de paroi latérale (2) s'étendant au moins sur une section partielle périphérique de la paroi latérale (1), lequel se compose d'éléments de surface structurés (4), d'éléments de surface lisses (3) et d'un hachurage de base (5) adjacent à ces éléments de surface (3, 4) composé de nervures de hachurage (10) sans ramification ni intersection, les éléments de surface structurés (4) reproduisant une copie ou une ombre au moins de zones partielles d'éléments de surface lisses (3) et les éléments de surface structurés (4) absorbant la lumière plus fortement que le hachurage de base (5),
**caractérisé en ce que**
les éléments de surface structurés (4) soient chacun pourvus d'une structure de contraste recouvrant la surface avec des trains de nervures ramifiés (11), chaque train de nervures ramifié (11)présentant des points d'intersection (K₁), à partir desquels le train de nervures (11) s'étend dans au moins trois directions, les trains de nervures (11) étant allongés dans une direction et s'étendant parallèlement les uns aux autres en vue de dessus par rapport à leur direction d'extension longitudinale (E_{R}), et les nervures de hachurage (10) du hachurage de base (5) présentant des flancs de nervures (10a) qui s'étendent selon un premier angle (β) par rapport à une perpendiculaire à la paroi latérale (1), le train de nervures (11) présentant des flancs de nervures (11e) qui s'étendent par rapport à une perpendiculaire à la paroi latérale (1) selon un deuxième angle (ε), le premier angle (β) étant au moins égal à 250 %, de préférence au moins égal à 300 %, du deuxième angle (ε).

3. Pneu de véhicule selon la revendication 1 ou 2, **caractérisé en ce que** chaque train de nervures (11, 15a) s'étend à partir des points d'intersection (K₁, K₂) dans exactement trois directions.

4. Pneu de véhicule selon la revendication 2, **caractérisé en ce que** chaque train de nervures (11), considéré en vue de dessus, se compose de nervures (11a, 11b) se succédant en alternance, s'étendant selon une forme en zigzag régulière et de nervures (11c) s'étendant de manière rectiligne qui dérivent de celles-ci.

5. Pneu de véhicule selon la revendication 2 ou 4, **caractérisé en ce que** les nervures de hachurage (10) du hachurage de base (5) présentent à leur base un premier écartement mutuel (a_{SR}) et les trains de nervures (11) s'étendant parallèlement entre eux présentent entre eux un deuxième écartement mutuel (a_{R}), le premier écartement (a_{SR}) étant au moins égal à 150 % du deuxième écartement (a_{R}).

6. Pneu de véhicule selon la revendication 1, **caractérisé en ce que** la structure de contraste est formée de cellules de structure de contraste (14) assemblées, présentant une forme identique en vue de dessus, avec chacune une structure irrégulière de crêtes et de creux (15), la structure de contraste présentant, le long des points de jonction mutuels des cellules de structure de contraste (14), des creux (16) définissant la trame,
la structure irrégulière de crêtes et de creux (15) s'étendant jusqu'aux creux (16) définissant la trame, et les creux (15b) se terminant de manière fermée partant des creux (16) définissant la trame.

7. Pneu de véhicule selon la revendication 1 ou 6, **caractérisé en ce que** les nervures de hachurage (10) du hachurage de base (5) présentent des flancs de nervures (10a) qui s'étendent selon un premier angle (β) par rapport à une perpendiculaire à la paroi latérale (1), le train de nervures (15a), qui fait partie d'une structure irrégulière de crêtes et de creux (15), présentant des flancs de nervures (15a₂) qui s'étendent en une pluralité de points selon un deuxième angle (δ) par rapport à une perpendiculaire à la paroi latérale, le premier angle (β) étant au moins égal à 200 %, de préférence au moins égal à 250 %, et de manière particulièrement préférée au moins égal à 300 % du deuxième angle (δ).

8. Pneu de véhicule selon l'une quelconque des revendications 1 à 7, **caractérisé en ce que** les éléments de surface structurés (4) et le hachurage de base (5) sont chacun formés à l'intérieur de surfaces décoratives polygonales (6), entre lesquelles s'étend un motif réticulé, au moins par sections irrégulier, formé par les éléments de surface lisses (3), avec des entretoises allongées (3a).

9. Pneu de véhicule selon la revendication 8, **caractérisé en ce que** les surfaces décoratives polygonales (6) sont composées chacune d'un seul élément de surface structuré (4) et d'un élément de surface en une ou plusieurs parties (5a) formant une zone partielle du hachurage de base (5).

10. Pneu de véhicule selon l'une quelconque des revendications 1 à 9, **caractérisé en ce que** les éléments de surface structurés (4) sont décalés de manière concordante par rapport aux éléments de surface lisses (3) de telle sorte que les ombres reproduites par les éléments de surface structurés (4) reflètent une source lumineuse provenant d'une seule direction (flèche P₁).

11. Pneu de véhicule selon l'une quelconque des revendications 1 à 10, **caractérisé en ce que** les éléments de surface structurés (4) sont des surfaces décoratives, en particulier des surfaces décoratives de différentes formes, la ou les zones du décor de paroi latérale (2) exemptes d'éléments de surface structurés (4) et d'éléments de surface lisses (3) étant occupées par le hachurage de base (5).

12. Pneu de véhicule selon la revendication 11, **caractérisé en ce que** des paires composées chacune d'un élément de surface structuré (4) et d'un élément de surface lisse (3) sont prévues, les éléments de surface (3, 4) appartenant à une paire étant conçus de manière à être adjacents l'un à l'autre, en particulier conçus de manière à être contigus l'un à l'autre, l'élément de surface lisse (3) pénétrant dans l'élément de surface structuré (4) de telle sorte que l'élément de surface structuré (4) apparaît comme une ombre décalée vers l'arrière par rapport à l'élément de surface lisse (3).
